# EUROPEAN PATENT SPECIFICATION

(11) **EP 2 748 508 B1**
(45) Date of publication and mention of the grant of the patent: **21.06.2017**
(21) Application number: 12799633.8
(22) Date of filing: 09.11.2012
(51) Int. Cl.: F16L 33/22

(54) **CONNECTING DEVICE FOR FLEXIBLE PIPES.**
VERBINDUNGSVORRICHTUNG FÜR SCHLÄUCHE
DISPOSITIF DE RACCORD DESTINÉ À DES TUYAUX FLEXIBLES

(30) Priority: 11.11.2011 IT RN20110078
(43) Date of publication of application: 02.07.2014
(73) Proprietor: BUCCHI S.R.L., 48022 Lugo (RA) (IT)
(72) Inventor: BUCCHI, Domenico, I - 48022 Lugo (Ravenna) (IT); CALDERONI, Omer, I - 48123 Ravenna (IT)
(74) Representative: Zermani, Umberto
(86) International application number: PCT/IB2012/056302
(87) International publication number: WO 2013/068983

(56) References cited:
- EP-A2- 0 264 587
- WO-A1-2012/027785
- US-A- 3 980 325
- US-A- 4 257 629

## Description

### Technical field

This invention relates to a device for connecting flexible pipes, in particular for pipes made from plastic material or the like.

This invention relates in particular to connecting devices for joining flexible pipes together or to other fluid distribution devices.

### Background art

As is known, the connecting devices for flexible pipes comprise a main body, generally known as "hose connector", equipped with a tubular portion which can be fitted inside an end of the pipe to be jointed.

The tubular portion is dimensioned according to the internal size of the pipe for being forced inside the pipe. In this way, the pipe, made of elastic material such as rubber, deforms slightly for adhering on the tubular portion of the hose connector.

The connecting devices also comprise a fastening ring, positioned around the tubular portion of the hose connector and designed to retain the pipe on the tubular body.

In more detail, the fastening ring is movable using the action of a threaded ring nut along a radial direction towards the tubular portion of the hose connector.

In this way, the flexible pipe remains fixed and retained between the outer surface of the tubular portion and the inner surface of the fastening ring.

The threaded ring nut comprises an annular bushing, positioned around the hose connector and the fastening ring. The threaded ring nut is moved manually, screwing the ring nut about a threaded portion made on the hose connector. This screwing determines the axial movement of the ring nut which pushes the ring towards the flexible pipe to be jointed. More specifically, the ring nut has an inclined inner surface, in contact with an inclined outer surface of the ring.

During the screwing of the ring nut, the inclined surfaces slide on each other transferring the motion of the ring nut to the fastening ring which is compressed on the flexible pipe.

However, the connecting devices described above have major drawbacks. A first drawback is due to the poor hydraulic and mechanical seal between the flexible pipe and the hose connector.

In effect, under particular conditions of use (for example, with high pressures of passage of the fluid in the flexible pipe), the fluid passing in the flexible pipe can leak between the outer surface of the tubular portion and the inner surface of the pipe fitted on the portion. In this condition, the inner surface of the ring loses adherence on the outer surface of the pipe causing the possible detachment from the connecting device.

This drawback is even more crucial in the conditions in which a tubular portion of the hose connector is used which is too small relative to the flexible pipe. In effect, considering the various types of flexible pipe and the various dimensions which the pipe may have, it is impossible to prepare a hose connector which is always suitable for the dimensions of the pipe. For this reason, hose-carrier bodies are sometimes used with a tubular portion much smaller than the diameter of the flexible pipe, with the consequent formation of clearance between the hose connector and the pipe. In this situation, the fastening ring is not sufficient to guarantee the hydraulic seal and the mechanical seal between the pipe and the entire device.

The flexible pipes produced normally have, for the same nominal internal diameter, a large variability in the real value of the internal diameter. These high production tolerances have a negative affect on the possibility of always and reliably obtaining a good hydraulic and mechanical seal on the hose connector.

Moreover, the flexible pipes available on the market have irregularities in the geometry of their outer surface, sometimes due to defects and/or variabilities physiologically inherent in the production processes (in particular, but not exclusively, in the extrusion process), other times due to intrinsic characteristics of the pipe. The prior art connecting devices are not able to compensate for all these variations of external geometry, with obvious negative affects on the mechanical and/or hydraulic seal of the connecting device.

Another solution is known from the patent publication US4257629, which shows a joint for flexible pipes, according to the preamble of claim 1, provided with a supporting body equipped with a tubular element provided with two portions with decreasing diameters successive to each other, a seal ring positioned around the tubular portions of the supporting body and switchable between an engaging position wherein it retains the flexible pipe on the tubular portion and a releasing position wherein it disengages the flexible pipe, and an external ring nut for tightening the ring (and thus the joint).

It should be noted that the seal ring of the patent US4257629 has a fully truncated cone shape, that is, flared, since it is mountable, by an operator, both with the flare facing away from the supporting body and vice versa, depending on the thickness and/or diameter of the pipe to be connected. Disadvantageously, this characteristic compromises considerably the compactness of the joint, since it has a particularly marked extension both axially and radially.

More specifically, to allow the use of this joint with pipes with very variable thicknesses, it would be necessary to provide a joint with a large radial size, which is particularly disadvantageous if the connection is to be performed in restricted spaces.

In this regard, it should be noted that the document in question does not raise the problem just highlighted since the joint described therein is dedicated to the making of outdoor irrigation systems.

### Disclosure of the invention

In this context, the aim of this invention is to provide a connecting device for flexible pipes which is free of the above mentioned drawbacks.

More specifically, the aim of this invention is to provide a connecting device which has reduced dimensions, both from an axial and radial point of view.

Moreover, the aim of this invention is to provide a connecting device which is reliable and able to maintain the mechanical and hydraulic seal irrespective of the dimensions of the flexible pipe, in particular irrespective of the internal dimensional tolerance and/or of the geometrical variations of the outer surface of the pipes.

The technical purpose indicated and the aim specified are substantially achieved by the invention which is a connecting device for flexible pipes according to claim 1. Optional features are defined by the dependent claims.

### Brief description of drawings

Further features and advantages of the invention are more apparent in the non-limiting description which follows of a preferred embodiment of a connecting device for flexible pipes as illustrated in the accompanying drawings, in which:

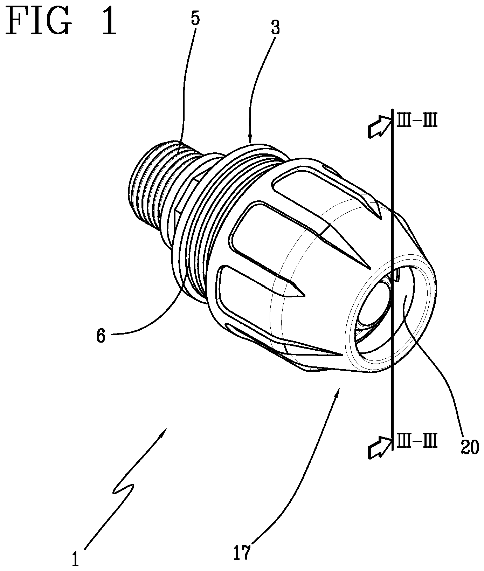

- Figure 1 is a perspective view of a connecting device for flexible pipes in accordance with this invention;
- Figure 2 is a perspective, exploded view of the device of Figure 1.
- Figure 3 is a longitudinal cross-section along line III-III of the device of Figure 1; and
- Figure 4 is an enlargement of a construction detail of the cross-section of Figure 3.

### Detailed description of preferred embodiments of the invention

With reference to the accompanying drawings, the numeral 1 denotes in its entirety a connecting device for flexible pipes 2 according to this invention.

It should be noted that this invention is advantageously used for flexible pipes such as, for example, pipes made of plastic material, or the like, mostly used in irrigation systems. However, the device 1 can be used for all the applications which require the jointing of flexible pipes of various kinds.

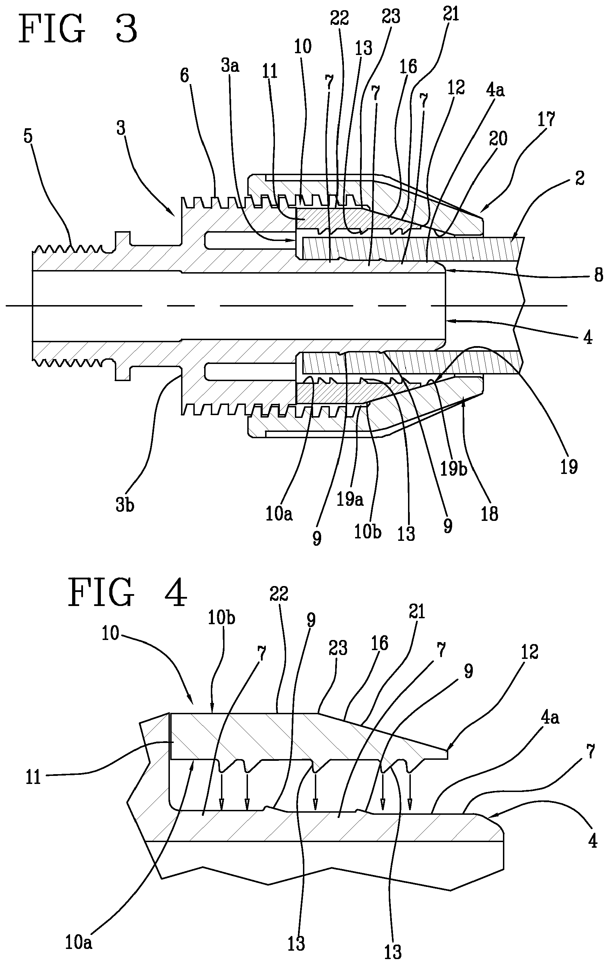

More specifically, the device 1 comprises a supporting body 3, equipped with at least one tubular portion 4 which may be inserted in a relative flexible pipe 2 which is schematically illustrated in Figure 3.

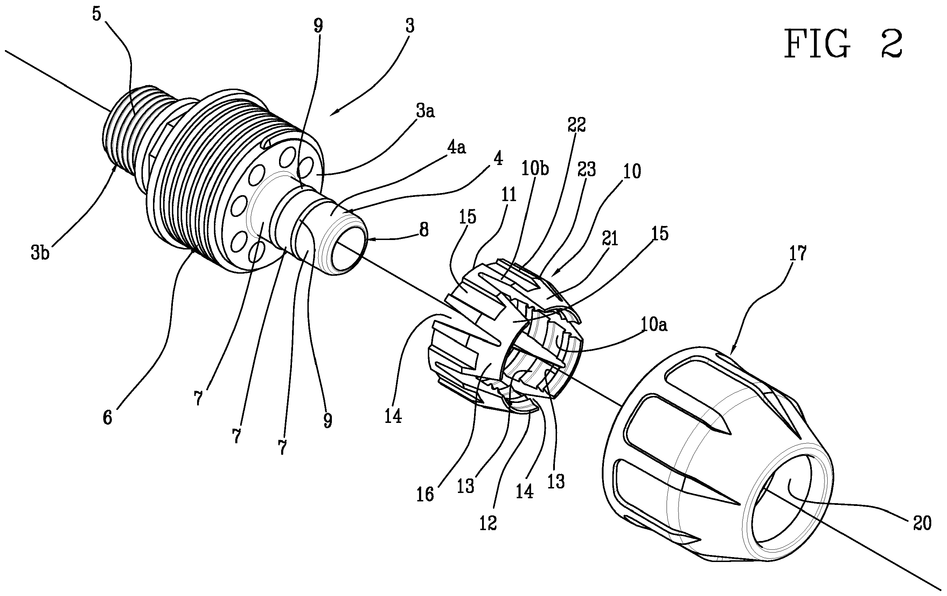

The supporting body 3, which is better illustrated in Figures 2 and 3, has a substantially cylindrical shape and is hollow for allowing the passage of fluid. The body 3 has at a respective first end 3a the above-mentioned tubular portion 4 protruding from the body 3.

On the side opposite to the first end 3a of the supporting body 3 extends a second end 3b which is used for connecting to another pipe or similar element. By way of example, the accompanying drawings illustrate a threaded joint 5, protruding from the second end 3b and designed to be screwed to a hydraulic user device (not illustrated as not forming part of this invention). The second end 3b can be fitted with various types of prior art connectors (for example, but not exclusively, of the "Storz" type, of the quick coupling type or the like). The second end 3b can also be fitted with another connecting device exactly in a mirror-like fashion to that of this invention.

Between the first and the second ends 3a, 3b of the body 3 extends an outer threaded surface 6 having a cylindrical shape.

The tubular portion 4 has a substantially truncated cone shape for being forced inside the flexible pipe 2 and causing a slight plastic deformation.

In this way, the flexible pipe 2 is fitted and adherent to the outer surface 4a of the tubular portion 4 as schematically illustrated in Figure 3.

In more detail, the tubular portion 4 has at least two adjacent zones 7 each having a different transversal cross-sectional dimension. The zones 7 increase in size starting from an end 8 of the tubular portion towards the above-mentioned end 3a of the body 3. In this way, the zones 7 form cylindrical and progressive sections of the tubular portion 4, which are hollow and coaxial to the longitudinal extension of the body 3.

Preferably, the tubular portion 3 comprises three zones 7 extending uninterruptedly as illustrated in more detail in Figures 2 and 3.

Moreover, the tubular portion 4 has two protruding elements 9, each of which interposed between two adjacent zones 7.

Each protruding element 9 extends from the outer surface 4a of the tubular portion 4 along the entire transversal extension of the portion 4.

In this way, each protruding element 9 has an annular shape. Moreover, as better illustrated in the enlarged view in Figure 4, each element 9 has a transversal cross-section saw tooth profile, designed to partly deform the inner surface of the flexible pipe and prevent the withdrawal from the tubular portion 4.

The device 1 also comprises a seal ring 10, positioned around the tubular portion 4 of the supporting body 3. As described in more detail below, the seal ring 10 is switchable between an engaging position wherein it retains the flexible pipe 2 on the tubular portion 4 (Figure 3) and a releasing position wherein it disengages the flexible pipe.

More specifically, the seal ring 10 has an inner cylindrical surface 10a facing the tubular portion 4 of the supporting body 3, and an outer cylindrical surface 10b opposite the inner surface 10a.

The ring 10 also has a first circular edge 11 in contact with the first end 3a of the body 3 and a second circular edge 12 positioned at the end 8 of the tubular portion 4.

Advantageously, the ring 10 has at least one annular rib 13, concentric with the longitudinal extension of the tubular portion 4 and protruding from the inner surface 10a.

As better illustrated in Figure 4, the rib 13 has a transversal cross-section saw tooth profile, again designed to partly deform the outer surface of the flexible pipe 2 and prevent the withdrawal from the tubular portion 4.

In effect, it should be noted that in the position for engaging the ring 10, the inner surface 10a is flattened on the outer surface of the flexible pipe 2 to retain the pipe 2 between the ring 10 and the tubular portion 4. In this condition, the inner surface of the pipe 2 interferes with the protruding element 9 (or the protruding elements 9, when they are in a number greater than 1). The presence of the protruding element 9 (or the protruding elements 9, when they are in a number greater than 1) in the engaging position of the seal ring 10 allows the hydraulic seal of the connecting device 1.

The rib 13 is also compressed on the pipe 2 deforming the outer surface. Preferably, the ring 10 has a plurality of ribs 13 and in particular at least one rib 13 for each zone 7 of the tubular portion 4. In this way, each rib 13 faces a respective zone 7 of the tubular portion 4.

Advantageously, according to a preferred embodiment illustrated in the accompanying drawings, the ring 10 comprises at least two pairs of ribs 13, each equipped with two ribs 13 positioned side by side, and a single rib 13 positioned between the two pairs.

In this way, the outermost zones 7 (close to the end 8 of the portion 4 and to the first end 3a of the body 3) face the respective pairs of ribs 13, whilst the central zone 7 faces a single rib 13.

More specifically, when the seal ring 10 is in the engaging position, the rib 13 (or the ribs 13) facing the zone 7 alternate with each other, along the longitudinal axis of the connecting device 1, with the protruding element 9 (or with the protruding elements 9, when they are in a number greater than 1).

The presence of the ribs 13 allows the hydraulic seal of the connecting device 1 to be improved when the seal ring 10 is in the engaging position, allowing, thanks to their relative positioning with respect to each protruding element 9, an optimum interference to be obtained between the protruding element 9 and the pipe 2.

As well as maintaining an optimum mechanical seal of the flexible pipe 2, the ribs 13 also guarantee a further hydraulic seal avoiding any leakages of fluid between the ring 10 and the pipe 2.

In effect, it should be noted that the ribs 13 form a plurality of containment stages of the fluid, positioned in succession precisely for reducing any leakages of fluid.

With reference to Figure 2, it should be noted that the first and a second edges 11, 12 of the ring 10 have an undulating profile forming recessed portions 14 alternating with protruding portions 15. In other words, the recessed portions 14 constitute openings made on the ring starting from a respective edge 11, 12.

In this way, the ring has a "concertina" shape, that is to say, with an alternating trend wherein the protruding portions 15 form elements which move towards each other in the position of engaging the ring 10.

In other words, when the ring 10 is switched to the engaging position, the ring is flattened towards the tubular portion 4 moving the protruding portions 15 close to each other and reducing the amplitude of the recessed portions 14. In this way, thanks to the presence of the recessed portions 14, the entire ring 10 is particularly elastic for switching between the above-mentioned engaging and releasing positions.

The outer surface 10b of the ring 10 has a partly truncated cone profile equipped, at the second edge 12, with an inclined plane 16 flared towards the second edge 12.

More specifically, the outer surface 10b of the ring 10 has a first portion 21 (forming the inclined plane 16) and a second portion 22 successive to each other and connected at an intermediate zone 23 of the ring 10.

It should be noted that the term "intermediate zone" means a section of the ring 10 spaced from both the edges 11, 12.

Preferably, the ratio between the axial extension (that is, parallel to a central axis of the joint 1) of the first portion 21 and that of the second portion 22 is between 0.5 and 2.

In the preferred embodiment, this ratio is between 0.8 and 1.2. Consequently, the "intermediate zone" 23 is substantially a middle portion of the ring 10.

The first portion 21 has a truncated cone shape, extending away from the second edge 12 with increasing cross-section (until reaching the intermediate zone 23).

The second portion 22 extends between the intermediate zone 23 and the first edge 11 forming a substantially cylindrical profile.

In other words, the first 21 and the second 22 portion of the ring 10 are set at an angle to each other.

Consequently, the second portion 22 is a substantially cylindrical portion of the ring 10, whilst the first portion 21 is a truncated cone shaped portion. For this reason, the ring 10 has a substantially trapezoidal cross-section. Advantageously, in this way it is possible to considerably reduce the dimensions of the joint 1, making it more compact.

More specifically, thanks to this shape of the ring 10 it is possible to obtain joints with reduced diameters and lengths (axial).

The device 1 also comprises means 17 of moving the seal ring 10 for switching the ring 10 between the above-mentioned engaging and releasing positions.

More in detail, the moving means 17 comprise a threaded ring nut 18, having a partly truncated cone shape and and being hollow.

The ring is 18 is screwed onto an outer threaded surface 6 of the supporting body 3 in such a way as to be positioned around the tubular portion 4 and contain the above-mentioned ring 10.

The ring nut 18 also has a flare towards the flexible pipe 2 which forms at a respective inner surface 19 an inclined plane 20.

In this way, a portion of the inner surface 19 comprises the thread screwed to the threaded surface 6 of the body 3, whilst a portion of the inner surface 19 close to the flexible pipe 2 comprises the above-mentioned inclined plane 20.

The inclined plane 20 is parallel to the inclined plane 16 of the ring 10 and slidably resting on it.

Preferably, the inner surface 19 of the ring nut 18 has a shape substantially shaped to match those of the outer surface 10b of the ring 10.

In other words, the inner surface 19 of the ring nut 18 has a substantially cylindrical portion 19a (partly screwable to the body 3 and partly superposable on the ring 10) and a portion 19b with a substantially truncated cone shape superposable on the first portion of the ring 10 (for forming an active portion of the moving means 17).

Thus, the truncated cone portion 19b of the inner surface 19 of the ring nut 18 is substantially oriented parallel to the first portion 21 of the outer surface 10b of the ring 10.

Preferably, there are no locking or pushing bodies on the ring nut 18 designed to act on the second edge 12 of the ring 10, but the pushing action is distributed on the entire first portion 21 of the outer surface 10b of the ring 10.

Advantageously, in this way the joint 1 can be adapted to pipes with a wide range of diameters, guaranteeing the seal.

In effect, the first portion of the ring 10 (that is, the truncated cone portion), being slidably associated with the truncated cone portion 19b of the inner surface 19 of the ring nut 18 and not having locking elements, allows the locking of the joint 1 only when the correct seal is reached.

In this regard, it should be noted that the prior art documents (in particular patent US4257629) all provide for a stopping and pushing tooth positioned at an end portion of the ring nut and designed to act on the second edge of the ring which, after reaching abutment between ring nut and ring, prevents checking whether the tightness of the joint is complete and effective.

In use, following the manual screwing/unscrewing of the ring nut 18 on the body 3, the ring nut 18 is moved along the longitudinal extension of the body 3 causing the sliding of the inclined planes 16, 20. Consequently, when the ring nut 18 is screwed and moved towards the second end 3b of the body 3, the inclined plane 20 of the ring nut slides on the inclined plane 16 of the ring, moving the ring 10 towards the tubular portion 4 in the respective engagement position. On the other hand, to release the flexible pipe 2, the ring nut 18 is unscrewed and moved towards the pipe 2.

In this case, the ring 10, due to its elastic characteristic, moves away from the pipe 2 detaching the relative inner surface 10a from the pipe 2.

Advantageously, the device 1 guarantees an optimum mechanical and hydraulic seal.

This advantage is due to the presence of the protruding elements 9 and the ribs 13 which, due to their saw tooth shape, guarantee a stable engagement with the flexible pipe 2, preventing the withdrawal from the tubular portion 4.

Moreover, as already indicated, the ribs 13 form sequential compartments, designed to contain any fluid leakages.

A further advantage is due to the versatility of use of the device 1 with flexible pipes 2 of different types and dimensions. In effect, the shape of the tubular portion with a variable cross-section guarantees an engagement without clearance with the flexible pipe 2. For this reason, even in the case of pipes with particularly large diameters, the zone 7 which has the larger cross-section (close to the first end 3a of the body 3) guarantees a forcing of the portion 4 inside the pipe 4 eliminating any clearances and consequent fluid leakages.

## Claims

1. A connecting device for flexible pipes, comprising:
- a supporting body (3), having at least one tubular portion (4) protruding form a first end (3a) of the body (3) and which may be inserted in a relative flexible pipe (2), wherein the tubular portion (4) of the supporting body (3) has a plurality of zones (7) consecutive to each other and each having a different transversal cross-sectional dimension; the zones (7) increasing in size starting from an end (8) of the tubular portion (4);
- a seal ring (10), extending axially between a first (11), in contact with said first end (3a), and a second edge (12), positioned around the end (8) of the tubular portion (4) of the supporting body (3) and switchable between an engaging position wherein it retains the flexible pipe (2) on the tubular portion (4) and a releasing position wherein it disengages the flexible pipe (2); said ring (10) comprising at least one annular rib (13), concentric with the longitudinal extension of the tubular portion (4) and protruding from the inner surface (10a) of the ring (10);
- means (17) of moving the seal ring (10) for switching the ring (10) between the engaging position and the releasing position;
wherein the tubular portion (4) of the supporting body (3) comprises at least one protruding element (9), extending from the outer surface (4a) of the tubular portion (4) along the entire transversal extension of the portion (4);
the protruding element (9) being interposed between two adjacent zones (7) of the tubular portion (4) having a different transversal cross-sectional dimensions; wherein an outer surface (10b) of the ring (10) has a first portion (21) and a second portion (22) arranged one after another along an axial extension of the ring (10) and connected at a relative intermediate zone (23) of the selfsame outer surface (10b); the first portion (21) having a truncated cone shape, extending away from the second edge (12) with increasing cross-section and the second portion (22) extending between the intermediate zone (23) and the first edge (11) forming a substantially cylindrical profile;
**characterized in that** the seal ring (10) comprises at least one annular rib (13) for each zone (7) of the tubular portion (4), wherein said at least one rib (13) faces a relative zone (7) of the tubular portion (4) so that, when the seal ring (10) is in the engaging position, the at least one rib (13) facing the zone (7) alternate with each other, along the longitudinal axis of the connecting device (1), with the protruding element (9).

2. The device according to the preceding claim, **characterised in that** each zone (7) forms an internally hollow cylindrical section of the tubular portion (4); the cylindrical sections forming a truncated cone profile of the tubular portion (4) for forcing the portion (4) inside the flexible pipe (2).

3. The device according to the preceding claim, **characterised in that** the tubular portion (4) comprises three zones (7), and two protruding elements (9) each of which interposed between two adjacent zones (7).

4. The device according to any of the foregoing claims, **characterised in that** the protruding element (9) has an annular shape and a transversal cross-section having a saw tooth profile for partly deforming the inner surface of the flexible pipe (2).

5. The device according to any of the foregoing claims, **characterised in that** the seal ring (10) has a cylindrical inner surface (10a) facing the tubular portion (4) of the supporting body (3); the inner surface (10a), in the position for engaging the ring (10), being flattened on the outer surface of the flexible pipe (2) to retain the flexible pipe (2) between the ring (10) and the tubular portion (4).

6. The device according to the preceding claim, **characterised in that** the rib (13) has a transversal cross-section saw tooth profile for partly deforming the outer surface of the flexible pipe (2).

7. The device according to the preceding claim, **characterised in that** the ring (10) comprises at least two ribs (13) for each zone (7) of the tubular portion (4); each pair of ribs (13) facing a relative zone (7) of the tubular portion (4).

8. The device according to the preceding claim, **characterised in that** the ring (10) comprises a first and a second edge (11, 12), each of which positioned at a relative end of the ring (10); the edges (11, 12) having an undulating profile forming recessed portions (14) alternating with protruding portions (15).

9. The device according to the preceding claim, **characterised in that** the protruding portions (15) form elements which move towards each other in the position of engaging the ring (10).

10. The device according to any one of the preceding claims, **characterised in that** the moving means (17) comprise a threaded ring nut (18), screwed onto a threaded surface (6) of the supporting body (3) and positioned around the tubular portion (4) and the seal ring (10); the ring nut (18) having an inner surface (19) forming at least partly an inclined plane (20) slidably associated with the first portion (21) of the outer surface (10b) of the ring (10).

## Patentansprüche

1. Verbindungsvorrichtung für Schläuche, umfassend:
- einen Stützkörper (3), aufweisend mindestens einen rohrförmigen Abschnitt (4), der aus einem ersten Ende (3a) des Körpers (3) hervorspringt und in einen entsprechenden Schlauch (2) eingefügt werden kann, wobei der rohrförmige Abschnitt (4) des Stützkörpers (3) eine Vielzahl an Zonen (7) aufweist, die nacheinander angeordnet sind und jeweils eine unterschiedliche, quer verlaufende Querschnittsabmessung aufweisen, wobei sich die Größe der Zonen (7) ausgehend von einem Ende (8) des rohrförmigen Abschnitts (4) erhöht;
- einen Dichtungsring (10), sich axial erstreckend zwischen einer ersten Kante (11), die mit dem ersten Ende (3a) in Berührung ist, und einer zweiten Kante (12), die rund um das Ende (8) des rohrförmigen Abschnitts (4) des Stützkörpers (3) positioniert ist, umschaltbar zwischen einer Eingriffsposition, in der er den Schlauch (2) auf dem rohrförmigen Abschnitt (4) hält, und einer Freigabeposition, in der er den Schlauch (2) löst, wobei der Ring (10) mindestens eine ringförmige Rippe (13) umfasst, die konzentrisch mit der Längsausdehnung des rohrförmigen Abschnitts (4) verläuft und aus der innenseitigen Oberfläche (10a) des Rings (10) hervorspringt;
- Mittel (17) zum Bewegen des Dichtungsrings (10) zum Umschalten des Rings (10) zwischen der Eingriffsposition und der Freigabeposition,
wobei der ringförmige Abschnitt (4) des Stützkörpers (3) mindestens ein vorspringendes Element (9) umfasst, das sich von der außenseitigen Oberfläche (4a) des rohrförmigen Abschnitts (4) entlang der gesamten quer verlaufenden Ausdehnung des Abschnitts (4) erstreckt,
wobei das vorspringende Element (9) zwischen zwei angrenzenden Zonen (7) des rohrförmigen Abschnitts (4) eingesetzt ist, aufweisend eine andere quer verlaufende Querschnittsabmessung,
wobei eine außenseitige Oberfläche (10b) des Rings (10) einen ersten Abschnitt (21) und einen zweiten Abschnitt (22) aufweist, die nacheinander entlang einer axialen Ausdehnung des Rings (10) angeordnet und an einer relativen Zwischenzone (23) der außenseitigen Oberfläche (10b) verbunden sind, wobei der erste Abschnitt (21) eine Kegelstumpfform aufweist, sich wegführend erstreckend von der zweiten Kante (12) mit zunehmendem Querschnitt, und sich der zweite Abschnitt (22) zwischen der Zwischenzone (23) und der ersten Kante (11) erstreckt, formend ein im Wesentlichen zylindrisches Profil, **dadurch gekennzeichnet, dass** der Dichtungsring (10) mindestens eine ringförmige Rippe (13) für eine jede Zone (7) des rohrförmigen Abschnitts (4) umfasst, wobei die mindestens eine Rippe (13) einer relativen Zone (7) des rohrförmigen Abschnitts (4) zugewandt ist, sodass die mindestens eine Rippe (13) der Zone (7) abwechselnd entlang der Längsachse der Verbindungsvorrichtung (1) mit dem vorspringenden Element (9) zugewandt ist, wenn sich der Dichtungsring (10) in der Eingriffsposition befindet.

2. Vorrichtung nach dem vorhergehenden Anspruch, **dadurch gekennzeichnet, dass** eine jede Zone (7) eine innenseitig hohle zylindrische Sektion des rohrförmigen Abschnitts (4) formt, wobei die zylindrischen Sektionen ein kegelstumpfförmiges Profil des rohrförmigen Abschnitts (4) formt, um den Abschnitt (4) in den Schlauch (2) zu drücken.

3. Vorrichtung nach dem vorhergehenden Anspruch, **dadurch gekennzeichnet, dass** der rohrförmige Abschnitt (4) drei Zonen (7) und zwei vorspringende Elemente (9) umfasst, von denen ein jedes zwischen zwei angrenzenden Zonen (7) eingesetzt ist.

4. Vorrichtung nach einem der vorhergehenden Ansprüche, **dadurch gekennzeichnet, dass** das vorspringende Element (9) eine Ringform und einen quer verlaufenden Querschnitt aufweist, aufweisend ein Sägezahnprofil, um die innenseitige Oberfläche des Schlauchs (2) teilweise zu verformen.

5. Vorrichtung nach einem der vorhergehenden Ansprüche, **dadurch gekennzeichnet, dass** der Dichtungsring (10) eine zylindrische innenseitige Oberfläche (10a) aufweist, die dem rohrförmigen Abschnitt (4) des Stützkörpers (3) zugewandt ist, wobei die innenseitige Oberfläche (10a) in der Position für das Eingreifen des Rings (10) auf der außenseitigen Oberfläche des Schlauchs (2) abgeflacht ist, um den Schlauch (2) zwischen dem Ring (10) und dem rohrförmigen Abschnitt (4) zu halten.

6. Vorrichtung nach dem vorhergehenden Anspruch, **dadurch gekennzeichnet, dass** die Rippe (13) ein quer verlaufendes Querschnittssägezahnprofil aufweist, um die außenseitige Oberfläche des Schlauchs (2) teilweise zu verformen.

7. Vorrichtung nach dem vorhergehenden Anspruch, **dadurch gekennzeichnet, dass** der Ring (10) mindestens zwei Rippen (13) für eine jede Zone (7) des rohrförmigen Abschnitts (4) umfasst, wobei ein jedes Paar Rippen (13) einer relativen Zone (7) des rohrförmigen Abschnitts (4) zugewandt ist.

8. Vorrichtung nach dem vorhergehenden Anspruch, **dadurch gekennzeichnet, dass** der Ring (10) eine erste und eine zweite Kante (11, 12) umfasst, von denen eine jede an einem relativen Ende des Rings (10) positioniert ist, wobei die Kanten (11, 12) ein Wellenprofil aufweisen, das vertiefte Abschnitte (14) formt, die sich mit vorspringenden Abschnitten (15) abwechseln.

9. Vorrichtung nach dem vorhergehenden Anspruch, **dadurch gekennzeichnet, dass** die vorspringenden Abschnitte (15) Elemente formen, die sich zueinander hinführend in die Position zum Eingreifen des Rings (10) bewegen.

10. Vorrichtung nach einem der vorhergehenden Ansprüche, **dadurch gekennzeichnet, dass** die Bewegungsmittel (17) eine Gewinderingmutter (18) umfassen, die auf eine Gewindeoberfläche (6) des Stützkörpers (3) aufgeschraubt und rund um den rohrförmigen Abschnitt (4) und den Dichtungsring (10) positioniert ist, wobei die Ringmutter (18) eine innenseitige Oberfläche (19) aufweist, die mindestens teilweise eine geneigte Ebene (20) formt, die verschiebbar mit dem ersten Abschnitt (21) der außenseitigen Oberfläche (10b) des Rings (10) assoziiert ist.

## Revendications

1. Dispositif de raccord destiné à des tuyaux flexibles, comprenant :
- un corps de support (3), comportant au moins une partie tubulaire (4) dépassant d'une première extrémité (3a) du corps (3) et pouvant être insérée dans un tuyau flexible (2) correspondant, dans lequel la partie tubulaire (4) du corps de support (3) comporte une pluralité de zones (7) consécutives l'une à l'autre et comportant chacune une dimension à section transversale différente : les zones (7) augmentant de taille en partant d'une extrémité (8) de la partie tubulaire (4) ;
- un anneau d'étanchéité (10), se prolongeant axialement entre un premier bord (11), en contact avec ladite première extrémité (3a), et un second bord (12), positionné autour de l'extrémité (8) de la partie tubulaire (4) du corps de support (3) et pouvant permuter entre une position d'engagement dans laquelle il retient le tuyau flexible (2) sur la partie tubulaire (4) et une position de relâchement dans laquelle il désengage le tuyau flexible (2) ; ledit anneau (10) comprenant au moins une nervure annulaire (13), concentrique à l'extension longitudinale de la partie tubulaire (4) et dépassant de la surface interne (10a) de l'anneau (10) ;
- des moyens (17) servant à déplacer l'anneau d'étanchéité (10) pour faire permuter l'anneau (10) entre la position d'engagement et la position de relâchement ;
dans lequel la partie tubulaire (4) du corps de support (3) comprend au moins un élément en saillie (9) se prolongeant de la surface externe (4a) de la partie tubulaire (4) le long de l'extension transversale entière de la partie (4) ;
l'élément en saillie (9) étant interposé entre deux zones adjacentes (7) de la partie tubulaire (4) comportant une dimension à section transversale différente ;
dans lequel une surface extérieure (10b) de l'anneau (10) comporte une première partie (21) et une seconde partie (22) disposées l'une après l'autre le long d'une extension axiale de l'anneau (10) et reliées à une zone intermédiaire (23) correspondante de la même surface externe (10b) ; la première partie (21) comportant une forme de cône tronqué, se prolongeant en s'éloignant du second bord (12) à section transversale croissante et la seconde partie (22) se prolongeant entre la zone intermédiaire (23) et le premier bord (11) formant un profil substantiellement cylindrique ; **caractérisé en ce que** l'anneau d'étanchéité (10) comprend au moins une nervure annulaire (13) pour chaque zone (7) de la partie tubulaire (4), dans lequel ladite au moins une nervure (13) fait face à une zone (7) correspondante de la partie tubulaire (4) de sorte que, lorsque
l'anneau d'étanchéité (10) se trouve dans la position d'engagement, l' au moins une nervure (13) faisant face à la zone (7) s'alterne réciproquement, le long de l'axe longitudinal du dispositif de raccord (1), avec l'élément en saillie (9).

2. Dispositif selon la revendication précédente, **caractérisé en ce que** chaque zone (7) forme une section cylindrique creuse à l'intérieur de la partie tubulaire (4) ; les sections cylindriques formant un profil de cône tronqué de la partie tubulaire (4) pour forcer la partie (4) à l'intérieur du tuyau flexible (2).

3. Dispositif selon la revendication précédente, **caractérisé en ce que** la partie tubulaire (4) comprend trois zones (7) et deux éléments en saillie (9) chacun d'eux interposé entre deux zones adjacentes (7).

4. Dispositif selon l'une quelconque des revendications précédentes, **caractérisé en ce que** l'élément en saillie (9) a une forme annulaire et une section transversale comportant un profil en dent de scie pour déformer en partie la surface interne du tuyau flexible (2).

5. Dispositif selon l'une quelconque des revendications précédentes, **caractérisé en ce que** l'anneau d'étanchéité (10) comporte une surface interne cylindrique (10a) faisant face à la partie tubulaire (4) du corps de support (3) ; la surface interne (10a), dans la position d'engagement de l'anneau (10), étant aplatie sur la surface extérieure du tuyau flexible (2) pour retenir le tuyau flexible (2) entre l'anneau (10) et la partie tubulaire (4).

6. Dispositif selon la revendication précédente, **caractérisé en ce que** la nervure (13) possède un profil en dent de scie à section transversale pour déformer en partie la surface extérieure du tuyau flexible (2).

7. Dispositif selon la revendication précédente, **caractérisé en ce que** l'anneau (10) comprend au moins deux nervures (13) pour chaque zone (7) de la partie tubulaire (4) ; chaque paire de nervures (13) faisant face à une zone correspondante (7) de la partie tubulaire (4).

8. Dispositif selon la revendication précédente, **caractérisé en ce que** l'anneau (10) comprend un premier et un second bord (11, 12), chacun d'eux positionné à une extrémité correspondante de l'anneau (10) ; les bords (11, 12) comportant un profil ondulé formant des parties renfoncées (14) alternant avec des parties en saillie (15).

9. Dispositif selon la revendication précédente, **caractérisé en ce que** les parties en saillie (15) forment des éléments se déplaçant les uns vers les autres dans la position d'engagement de l'anneau (10).

10. Dispositif selon l'une quelconque des revendications précédentes,
**caractérisé en ce que** les moyens de déplacement (17) comprennent un écrou à oeil fileté (18) vissé sur une surface filetée (6) du corps de support (3) et positionné autour de la partie tubulaire (4) et de l'anneau d'étanchéité (10) ; l'écrou à oeil (18) comportant une surface intérieure (19) formant au moins en partie un plan incliné (20) associé de façon coulissante à la première partie (21) de la surface extérieure (10b) de l' anneau (10).
